# EUROPEAN PATENT APPLICATION

(11) **EP 4 789 850 A1**
(43) Date of publication of application: **12.08.2026**
(21) Application number: 25864604.1
(22) Date of filing: 15.07.2025
(51) Int. Cl.: B29C 65/50, B29C 65/78, B65H 5/28, B65H 5/06, B29C 65/00, B29D 99/00, H01M 50/105

(54) **TAPE SUPPLY UNIT, APPARATUS FOR MANUFACTURING POUCH FOR SECONDARY BATTERY USING SAME, AND METHOD FOR MANUFACTURING POUCH FOR SECONDARY BATTERY USING SAME**

(30) Priority: 17.12.2024 KR 20240188424
(71) Applicant: LG ENERGY SOLUTION, LTD., Seoul 07335 (KR)
(72) Inventor: KIM, Seong Yong, Daejeon 34122 (KR); HYUN, Je Min, Daejeon 34122 (KR); MOON, Gun Ho, Daejeon 34122 (KR); KIM, Sang Jih, Daejeon 34122 (KR); OH, Sung Hun, Daejeon 34122 (KR)
(74) Representative: Plasseraud IP
(86) International application number: PCT/KR2025/010346
(87) International publication number: WO 2026/134502

(57) **Abstract**

The present disclosure relates to a tape supply unit, an apparatus for manufacturing a pouch for a secondary battery using the same and a method for manufacturing a pouch for a secondary battery using the same, and more particularly, to a tape supply unit for simplifying the structure and manufacturing process and improving process efficiency and productivity, an apparatus for manufacturing a pouch for a secondary battery using the same and a method for manufacturing a pouch for a secondary battery using the same. The apparatus for manufacturing the pouch for the secondary battery according to the present disclosure is configured to manufacture the pouch for the secondary battery including a pouch body accommodating an electrode assembly and a sealing portion disposed at the pouch body, and includes a support unit configured to support the sealing portion at a side, and a tape supply unit configured to supply an adhesive tape to a target adhesive surface of the sealing portion, wherein the tape supply unit includes a supply roll configured to supply a tape feed including the adhesive tape and a release sheet to which the adhesive tape is attached, and a mover configured to apply pressure to the release sheet to maintain tension of the tape feed, and move toward the support unit to attach the adhesive tape to the target adhesive surface.

## Description

### TECHNICAL FIELD

### CROSS-REFERENCE TO RELATED APPLICATIONS

This application is based on and claims priority from Korean Patent Application No. 10-2024-0188424 filed on December 17, 2024 with the Korean Intellectual Property Office, the disclosure of which is incorporated herein in its entirety by reference.

### TECHNICAL FIELD

The present disclosure relates to a tape supply unit, an apparatus for manufacturing a pouch for a secondary battery using the same and a method for manufacturing a pouch for a secondary battery using the same, and more particularly, to a tape supply unit for simplifying the structure and manufacturing process and improving process efficiency and productivity, an apparatus for manufacturing a pouch for a secondary battery using the same and a method for manufacturing a pouch for a secondary battery using the same.

### BACKGROUND ART

In general, the types of secondary batteries include nickel cadmium batteries, nickel hydrogen batteries, lithium-ion batteries and lithium-ion polymer batteries. Secondary batteries are used in not only small products such as digital cameras, P-DVDs, MP3Ps, mobile phones, PDAs, portable game devices, power tools and E-bikes, but also large products requiring high output such as electric vehicles or hybrid electric vehicles and energy storage systems that store surplus power or new renewable energy and energy storage systems for backup.

To manufacture secondary batteries, an electrode active material slurry is applied to a positive current collector and a negative current collector to manufacture a positive electrode and a negative electrode, and the positive electrode and the negative electrode are stacked on two sides of a separator to form an electrode assembly of a predetermined shape. Additionally, the electrode assembly is housed in a battery case, an electrolyte solution (an electrolyte) is injected into the battery case, and the battery case is sealed.

Secondary batteries may be classified into a pouch type and a can type according to the material of the battery case accommodating the electrode assembly.

The pouch type is configured to accommodate the electrode assembly in a pouch made of a flexible polymer material.

The electrode assembly may include the positive electrode and the negative electrode wound or stacked in a direction with the separator interposed between the positive electrode and the negative electrode, and the pouch may be provided by joining a lower sheet and an upper sheet that work together to define an accommodation space for accommodating the electrode assembly inside.

The pouch may be manufactured by joining the sides (edges) of the lower sheet and the upper sheet, and as the sides of the lower sheet and the upper sheet are joined together, a sealing portion is formed at the side (edge) of the pouch.

However, when the sealing portion is formed at the side of the pouch, an additional space for the sealing portion is needed, which reduces space utilization and the degree of freedom in design, making it difficult to maximize the volumetric efficiency or volumetric energy density of the secondary battery.

To minimize the dead volume occupied by the sealing portion of the pouch, a method that folds the sealing portion of the pouch, and bonds the folded sealing portion to the pouch using an adhesive (for example, a double-sided tape) has been proposed.

However, because the processes for folding and bonding the sealing portion of the pouch are performed by a folding device and a bonding device, respectively, it makes the structure and manufacturing process complex, and reduces space utilization and the degree of freedom in design as well as process efficiency and productivity.

Accordingly, recently, many studies are being conducted to simplify the processes for folding and bonding the sealing portion of the pouch and improve space utilization and the degree of freedom in design, but efforts toward development are still needed.

### DISCLOSURE

### TECHNICAL PROBLEM

The present disclosure is designed to solve the above-described problems, and therefore the present disclosure is directed to providing a tape supply unit for improving space utilization and the degree of freedom in design by minimizing the space occupied by a sealing portion, and an apparatus for manufacturing a pouch for a secondary battery using the same and a method for manufacturing a pouch for a secondary battery using the same.

The present disclosure is further directed to providing a tape supply unit for reducing the amount of adhesive tape used and minimizing errors in attaching the adhesive tape, and an apparatus for manufacturing a pouch for a secondary battery using the same and a method for manufacturing a pouch for a secondary battery using the same.

The present disclosure is further directed to providing an apparatus and method for manufacturing a pouch for a secondary battery for simplifying the structure of the manufacturing apparatus for performing the processes for folding and bonding the sealing portion of the pouch and improving space utilization and the degree of freedom in design.

The present disclosure is further directed to providing an apparatus and method for manufacturing a pouch for a secondary battery in which the process for bonding the sealing portion of the pouch is performed using a pressing unit for folding the sealing portion without a folding device for folding the sealing portion and a bonding device for bonding the sealing portion.

The present disclosure is further directed to providing an apparatus and method for manufacturing a pouch for a secondary battery for standardizing the size and shape of the pouch and reducing the pouch manufacturing time.

The present disclosure is further directed to providing an apparatus and method for manufacturing a pouch for a secondary battery for improving uniformity in folding and bonding of the sealing portion and enhancing safety and reliability.

### TECHNICAL SOLUTION

To solve the above-described problems, an apparatus for manufacturing a pouch for a secondary battery according to the present disclosure is configured to manufacture the pouch for the secondary battery including a pouch body accommodating an electrode assembly and a sealing portion disposed at the pouch body, and includes a support unit configured to support the sealing portion at a side, and a tape supply unit configured to supply an adhesive tape to a target adhesive surface of the sealing portion, and the tape supply unit may include a supply roll configured to supply a tape feed including the adhesive tape and a release sheet to which the adhesive tape is attached, and a mover configured to apply pressure to the release sheet to maintain tension of the tape feed, and move toward the support unit to attach the adhesive tape to the target adhesive surface.

The tape supply unit may further include a collection roll configured to collect the release sheet from which the adhesive tape has been separated from the tape feed.

The apparatus for manufacturing the pouch for the secondary battery according to the present disclosure may further include a pressing unit configured to press the sealing portion to attach the adhesive tape to the pouch body in a state that the adhesive tape is attached to the target adhesive surface.

A first adhesive surface which is a surface of the adhesive tape may be attached to the target adhesive surface, and a second adhesive surface which is an opposite surface of the adhesive tape may be attached to the pouch body.

The pressing unit may be configured to, in a state that the first adhesive surface is attached to the target adhesive surface, bend the sealing portion so that the second adhesive surface faces the pouch body, and bring the sealing portion into close contact with the pouch body to attach the second adhesive surface to the pouch body.

When the first adhesive surface is attached to the target adhesive surface, the mover may move in a direction away from the support unit, and the adhesive tape may be separated from the release sheet and attached to the target adhesive surface.

The sealing portion may include a first sealing portion protruding from the pouch body, and a second sealing portion folded from the first sealing portion, the target adhesive surface being present on the second sealing portion, and when the pressing unit folds the first sealing portion, the target adhesive surface may be disposed facing the pouch body.

The pressing unit may be configured to press the first sealing portion in a direction that gets closer to the pouch body in the folded state of the first sealing portion.

The adhesive tape may be attached to a first surface of the release sheet, and the mover may contact a second surface of the release sheet opposite the first surface.

The support unit may be configured to press the sealing portion to attach the adhesive tape to the pouch body in a state that the adhesive tape is supplied to the target adhesive surface.

A tape supply unit according to the present disclosure is configured to supply an adhesive tape for attaching a sealing portion to a pouch body, and includes a supply roll configured to supply a tape feed including the adhesive tape and a release sheet to which the adhesive tape is attached, and a mover configured to apply pressure to the release sheet to maintain tension of the tape feed, and move toward a support unit to attach the adhesive tape to the sealing portion.

The tape supply unit according to the present disclosure may further include a collection roll configured to collect the release sheet from which the adhesive tape has been separated from the tape feed.

A method for manufacturing a pouch for a secondary battery according to the present disclosure is used to manufacture the pouch for the secondary battery including a pouch body accommodating an electrode assembly and a sealing portion disposed at the pouch body, and includes a support unit placement step of placing a support unit at a side of the sealing portion, and an adhesive tape supplying step of supplying an adhesive tape to a target adhesive surface of the sealing portion, and the adhesive tape supplying step may include a feed supplying step of supplying a tape feed including the adhesive tape and a release sheet to which the adhesive tape is attached, and an adhesive tape attaching step of attaching the adhesive tape to the target adhesive surface by movement of a mover toward the support unit, the mover applying pressure to the release sheet to maintain tension of the tape feed.

The method for manufacturing the pouch for the secondary battery according to the present disclosure may further include, after the adhesive tape attaching step, a release sheet collection step of collecting the release sheet from which the adhesive tape has been separated from the tape feed.

The method for manufacturing the pouch for the secondary battery according to the present disclosure may further include, after the adhesive tape attaching step, a sealing portion pressing step of pressing the sealing portion to attach an opposite surface of the adhesive tape to the pouch body in a state that a surface of the adhesive tape is attached to the target adhesive surface.

The sealing portion pressing step may include a sealing portion folding step of folding the sealing portion, and an adhesive tape attaching step of pressing the sealing portion in a direction that gets closer to the pouch body to attach the opposite surface of the adhesive tape to the pouch body.

### ADVANTAGEOUS EFFECTS

The tape supply unit according to the present disclosure, the apparatus for manufacturing the pouch for the secondary battery including the same and the method for manufacturing the pouch for the secondary battery including the same have an effect of improving space utilization and the degree of freedom in design by minimizing the space occupied by the sealing portion.

Also, the present disclosure has an effect of reducing the amount of adhesive tape used and minimizing errors in attaching the adhesive tape.

Furthermore, there is an effect of simplifying the structure of the manufacturing apparatus for performing the processes for folding and bonding the sealing portion of the pouch.

Additionally, the present disclosure has an effect of performing the process for bonding the sealing portion of the pouch using the pressing unit for folding the sealing portion without a folding device for folding the sealing portion and a bonding device for bonding the sealing portion.

In addition, the present disclosure has an effect of standardizing the size and shape of the pouch and reducing the pouch manufacturing time.

Moreover, the present disclosure has an effect of improving uniformity in folding and bonding of the sealing portion and enhancing safety and reliability.

### BRIEF DESCRIPTION OF THE DRAWINGS

FIG. 1 is a perspective view of an apparatus for manufacturing a pouch for a secondary battery according to a first embodiment of the present disclosure.
FIG. 2 is a diagram illustrating a tape feed according to the first embodiment of the present disclosure.
FIG. 3 is a side view of the apparatus for manufacturing the pouch for the secondary battery according to the first embodiment of the present disclosure.
FIG. 4 is a diagram illustrating that a tape supply unit moves toward a sealing portion in the initial placement of the apparatus for manufacturing the pouch for the secondary battery according to the first embodiment of the present disclosure.
FIG. 5 is a diagram illustrating a process for attaching an adhesive tape to the sealing portion in the apparatus for manufacturing the pouch for the secondary battery according to the first embodiment of the present disclosure.
FIG. 6 is a diagram illustrating that the tape supply unit according to the first embodiment of the present disclosure moves away from the sealing portion after attaching the adhesive tape to the sealing portion.
FIG. 7 is a diagram illustrating that a supply roll supplies the tape feed and a collection roll collects a release sheet after the tape supply unit according to the first embodiment of the present disclosure moves away from the sealing portion.
FIG. 8 is a diagram illustrating a process for folding the sealing portion in the apparatus for manufacturing the pouch for the secondary battery according to the first embodiment of the present disclosure.
FIG. 9 is a diagram illustrating a process for attaching the adhesive tape to a pouch body in the apparatus for manufacturing the pouch for the secondary battery according to the first embodiment of the present disclosure.
FIG. 10 is a diagram illustrating a pouch for a secondary battery manufactured by the apparatus for manufacturing the pouch for the secondary battery according to the first embodiment of the present disclosure.
FIG. 11 is a diagram illustrating the process for attaching the adhesive tape to the sealing portion in the apparatus for manufacturing the pouch for the secondary battery according to a second embodiment of the present disclosure.
FIG. 12 is a diagram illustrating the process for folding the sealing portion in the apparatus for manufacturing the pouch for the secondary battery according to the second embodiment of the present disclosure.
FIG. 13 is a diagram illustrating the process for attaching the adhesive tape to the pouch body in the apparatus for manufacturing the pouch for the secondary battery according to the second embodiment of the present disclosure.
FIG. 14 is a flowchart of a method for manufacturing a pouch for a secondary battery according to a third embodiment of the present disclosure.
FIG. 15 is a flowchart of a sealing portion pressing step in the method for manufacturing the pouch for the secondary battery according to the third embodiment of the present disclosure.

### BEST MODE

Hereinafter, the exemplary embodiments of the present disclosure will be described with reference to the accompanying drawings in sufficient detail to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

### (First embodiment)

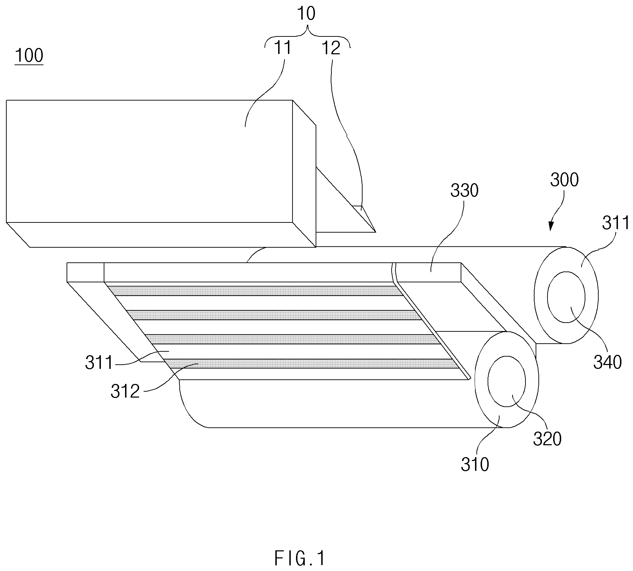

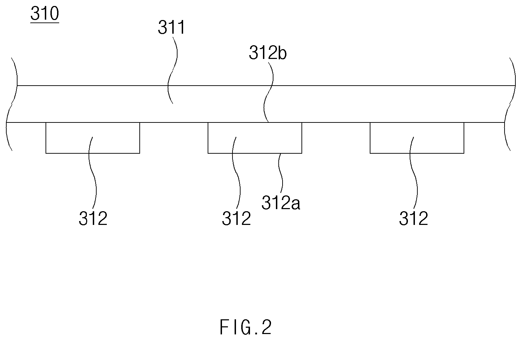

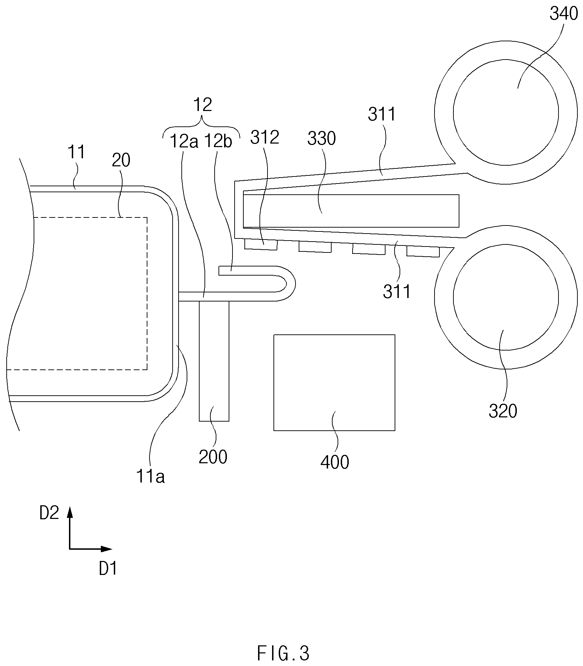

FIG. 1 is a perspective view of an apparatus for manufacturing a pouch for a secondary battery according to a first embodiment of the present disclosure, FIG. 2 is a diagram illustrating a tape feed according to the first embodiment of the present disclosure, and FIG. 3 is a side view of the apparatus for manufacturing the pouch for the secondary battery according to the first embodiment of the present disclosure.

Referring to FIGS. 1 to 3, the apparatus 100 of manufacturing the pouch for the secondary battery according to the first embodiment of the present disclosure may be configured to manufacture the pouch 10 for the secondary battery including a pouch body 11 accommodating an electrode assembly 20 and a sealing portion 12 disposed at a side 11a of the pouch body along a first direction D1, and the manufacturing apparatus 100 may include a support unit 200 and a tape supply unit 300.

Meanwhile, in this specification, the first direction D1 may refer to a horizontal direction, and the second direction D2 may refer to a vertical direction, but is not limited thereto, and a direction in which a first sealing portion 12a as described below protrudes from the pouch body 11 may be the first direction D1, and the second direction D2 may refer to a direction perpendicular to the first direction D1.

The apparatus 100 for manufacturing the pouch for the secondary battery according to the first embodiment of the present disclosure may be used to fold and bond the sealing portion 12 of the pouch 10, and the present disclosure is not limited or restricted by the type and structure of the pouch 10 used in the apparatus 100 for manufacturing the pouch for the secondary battery.

The pouch 10 may be provided with various structures including the pouch body 11 and the sealing portion 12, and the present disclosure is not limited or restricted by the structure and type of the pouch 10.

The pouch body 11 is provided to accommodate the electrode assembly 20 and wrap around the entire electrode assembly 20.

The pouch body 11 may be provided with various structures for accommodating the electrode assembly 20, and the present disclosure is not limited or restricted by the structure and shape of the pouch body 11.

As an example, the pouch body 11 may be provided by joining a lower sheet (not shown) and an upper sheet (not shown), each sheet having a roughly rectangular shape, and an accommodation space for accommodating the electrode assembly 20 may be defined between the lower sheet and the upper sheet.

Although the embodiment of the present disclosure described and illustrated above describes the pouch body 11 having the roughly rectangular shape by way of example, according to another embodiment of the present disclosure, the pouch body may have a circular shape or any other shape.

In addition, the pouch body 11 may be formed with a structure including a metal layer, for example, an aluminum thin film, in order to protect the components such as an electrolyte solution injected inside, enhance electrical and chemical properties by the electrode assembly 20 and the electrolyte solution and increase heat dissipation.

The electrode assembly 20 may include an electrode (not shown) and a separator (not shown) stacked on the electrode. As an example, the electrode may include a first electrode (for example, a positive electrode) stacked on one surface (for example, an upper surface) of the separator, and a second electrode (for example, a negative electrode) stacked on the other surface (for example, a lower surface) of the separator.

The sealing portion 12 may be formed by joining the sides (edges) of the lower sheet and the upper sheet that form the pouch body 11, and protrudes from the side of the pouch body 11 along the first direction D1 (left-right direction on the basis of FIG. 3).

For example, the sealing portion 12 may be formed along three or four sides of the pouch body 11. According to another embodiment of the present disclosure, the sealing portion 12 may be formed along one or two sides of the pouch body.

The sealing portion 12 may include the first sealing portion 12a and a second sealing portion 12b.

The first sealing portion 12a may protrude from the pouch body 11 along the first direction D1.

The second sealing portion 12b may be folded from the first sealing portion 12a, and a target adhesive surface 12c may be present on the second sealing portion 12b.

The target adhesive surface 12c may refer to a surface of the sealing portion 12 where an adhesive tape 312 will be attached. Specifically, the target adhesive surface 12c may be disposed at the second sealing portion 12b.

The adhesive tape 312 according to the present disclosure may be a double-sided tape. As shown in FIG. 2, one surface of the adhesive tape 312 may be a first adhesive surface 312a including an adhesive material, and the other surface may be a second adhesive surface 312b including an adhesive material.

The support unit 200 may support the sealing portion 12 at one side. The support unit 200 may support the sealing portion 12 at one side to prevent the sealing portion 12 from being bent or damaged when the tape supply unit 300 as described below presses the sealing portion 12 to attach the adhesive tape 312.

The support unit 200 may be provided with various structures for supporting the sealing portion 12 at the side opposite to the tape supply unit 300, and the present disclosure is not limited or restricted by the structure of the support unit 200.

To support the sealing portion 12, the surface of the support unit 200 may be formed in a shape that conforms to the surface of the sealing portion 12.

The support unit 200 may have a roughly rectangular block shape (a rectangular prism shape). The support unit 200 according to another embodiment of the present disclosure may have a spherical shape or any other shape.

The tape supply unit 300 may supply the adhesive tape 312 to the target adhesive surface 12c of the sealing portion 12.

The tape supply unit 300 may include a supply roll 320, a mover 330 and a collection roll 340.

The supply roll 320 may supply the tape feed 310. The supply roll 320 may supply the tape feed 310 in various ways depending on the required conditions and design specifications.

According to an exemplary embodiment of the present disclosure, the tape feed 310 may be provided in a state of being wound onto the supply roll 320 in a roll shape.

As described above, the embodiment of the present disclosure may have an advantageous effect of minimizing the facility and space for supplying the tape feed 310 by providing the tape feed 310 wound in a roll shape. According to another embodiment of the present disclosure, the tape feed may not be wound onto the supply roll, and the tape feed may be supplied in a straight line using a conveyor.

The tape feed 310 may include the adhesive tape 312 and a release sheet 311 to which the adhesive tape 312 is attached.

Before the adhesive tape 312 is transferred onto the sealing portion 12, the first adhesive surface 312a of the adhesive tape 312 may be exposed to the outside, and the second adhesive surface 312b may be in a state of being attached to the release sheet 311.

After the adhesive tape 312 is transferred onto the sealing portion 12, the first adhesive surface 312a of the adhesive tape 312 may be in a state of being attached to the target adhesive surface 12c, and the second adhesive surface 312b may be exposed to the outside.

After the sealing portion 12 is folded and pressed and then secured to the pouch body 11, the first adhesive surface 312a of the adhesive tape 312 may be in a state of being attached to the target adhesive surface 12c, and the second adhesive surface 312b may be in a state of being attached to the pouch body 11.

The mover 330 may be disposed between the supply roll 320 and the collection roll 340, and be configured to apply pressure to the release sheet 311 to maintain the tension of the tape feed 310, and move toward the support unit 200 to attach the adhesive tape 312 to the target adhesive surface 12c.

The adhesive tape 312 may be attached to one surface of the release sheet 311, i.e., a first surface, and the mover 330 may contact the other surface of the release sheet 311, i.e., a second surface opposite the first surface. Accordingly, the mover 330 may maintain the tension of the release sheet 311 by applying pressure to the second surface of the release sheet 311.

As shown in FIG. 3, the mover 330 may extend in the first direction D1. In this instance, when the mover 330 applies pressure to the second surface of the release sheet 311, the second surface of the release sheet 311 may tightly wrap one side of the mover 330 in the first direction D1, so tension may be maintained in the release sheet 311.

The mover 330 may move in the first direction D1 and/or the second direction D2. The mover 330 may apply pressure to the release sheet 311 while moving in the first direction D1, and get closer to or away from the sealing portion 12 while moving in the first direction D1 and/or the second direction D2. The linear movement of the mover 330 in the first direction D1 and/or the second direction D2 may be made in various ways depending on the required conditions and design specifications.

For example, the linear movement of the mover 330 in the first direction D1 and/or the second direction D2 may be made by a commonly used linear motion system such as a motor, a solenoid or a linear motor. According to another embodiment of the present disclosure, the mover 330 may be configured to move in a straight line along the first direction D1 and/or the second direction D2 in response to a lead screw's rotation.

The collection roll 340 may collect the release sheet 311 from which the adhesive tape 312 has been separated from the tape feed 310. The release sheet 311 from which the adhesive tape 312 has been separated may be wound onto the collection roll 340.

When the adhesive tape 312 is transferred onto the target adhesive surface 12c, the collection roll 340 may rotate to collect the release sheet 311 from which the adhesive tape 312 has been separated.

Specifically, in a state that tension is maintained in the release sheet 311 by the mover 330 applying pressure to the release sheet 311, when the collection roll 340 rotates in a direction, the release sheet 311 from which the adhesive tape 312 has been separated is wound onto the collection roll 340. In this instance, the supply roll 320 supplies the tape feed 310 while rotating in the direction together with the collection roll 340 as the collection roll 340 rotates.

Meanwhile, to make the supply roll 320 and the collection roll 340 rotate together, the supply roll 320 and the collection roll 340 may share one release sheet 311. That is, one side of the release sheet 311 may be wound onto the supply roll 320, and the other side may be wound onto the collection roll 340. Accordingly, the collection roll 340 collects the release sheet 311 as much as the supply roll 320 supplies the release sheet 311.

Meanwhile, the apparatus 100 for manufacturing the pouch for the secondary battery according to the first embodiment of the present disclosure may further include a pressing unit 400.

In a state that the adhesive tape 312 is attached to the target adhesive surface 12c, the pressing unit 400 may press the sealing portion 12 to attach the adhesive tape 312 to the pouch body 11.

The pressing unit 400 may press the sealing portion 12 in a direction that gets closer to the side 11a of the pouch body.

Specifically, in a state that the first adhesive surface 312a is attached to the target adhesive surface 12c, the pressing unit 400 may bend the sealing portion 12 so that the second adhesive surface 312b faces the pouch body 11, and bring the sealing portion 12 into close contact with the pouch body 11 to attach the second adhesive surface 312b to the pouch body 11.

More specifically, when the pressing unit 400 folds the first sealing portion 12a, the target adhesive surface 12c present on the second sealing portion 12b may be disposed facing the pouch body 11. Specifically, when the pressing unit 400 presses the sealing portion 12 in the second direction D2, the sealing portion 12 may be folded into an L-shape.

Additionally, in the bent state of the first sealing portion 12a, the pressing unit 400 may press the first sealing portion 12a in the direction that gets closer to the pouch body 11 again. Specifically, the pressing unit 400 may press the sealing portion 12 in the first direction D1 to bring the target adhesive surface 12c of the sealing portion 12 closer to the pouch body 11.

When the first adhesive surface 312a is attached to the target adhesive surface 12c, the mover 330 may move in a direction away from the support unit 200, and the adhesive tape 312 may be separated from the release sheet 311 and transferred onto the target adhesive surface 12c.

The pressing unit 400 may press the sealing portion 12 with the movement in the first direction D1 and/or the second direction D2. The linear movement of the pressing unit 400 in the first direction D1 and/or the second direction D2 may be made in various ways depending on the required conditions and design specifications.

As an example, the linear movement of the pressing unit 400 in the first direction D1 and/or the second direction D2 may be made by a commonly used linear motion system such as a motor, a solenoid or a linear motor. According to another embodiment of the present disclosure, the pressing unit 400 may be configured to move in a straight line along the first direction D1 and/or the second direction D2 in response to a lead screw's rotation.

Although the embodiment of the present disclosure described and illustrated above describes folding the sealing portion 12 so that the sealing portion 12 includes the first sealing portion 12a and the second sealing portion 12b, and then folding again with the medium of the pressing unit 400 by way of example, according to another embodiment of the present disclosure, the pressing unit may be configured to fold the unfolded sealing portion (for example, the sealing portion including only the first sealing portion), or additionally fold the sealing portion that has been folded twice or more.

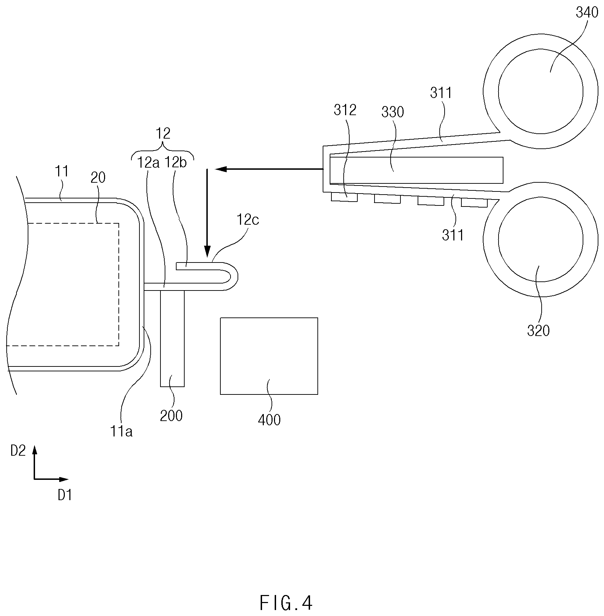

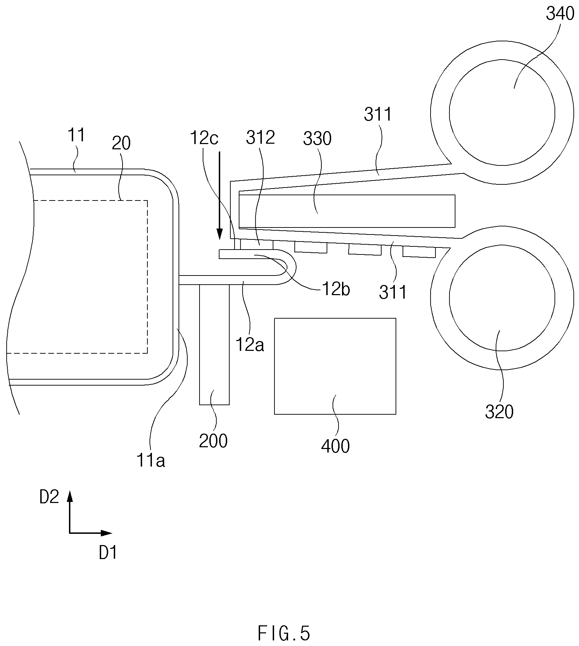

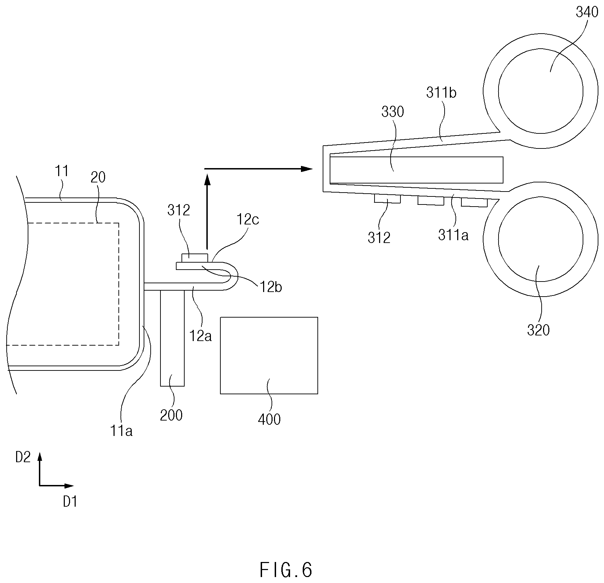

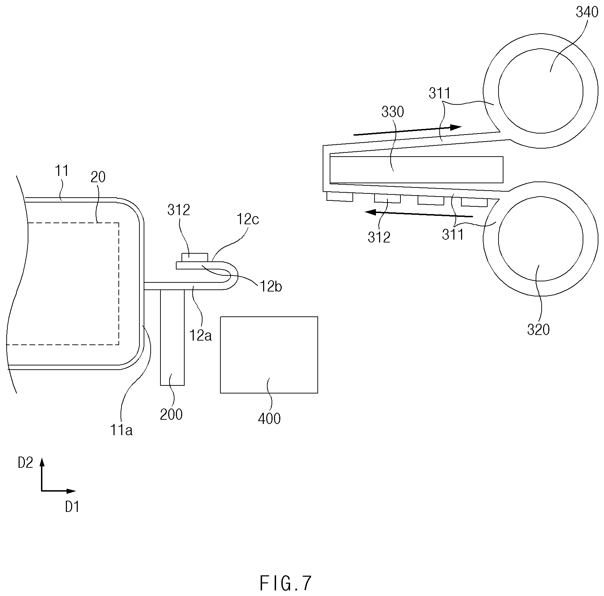

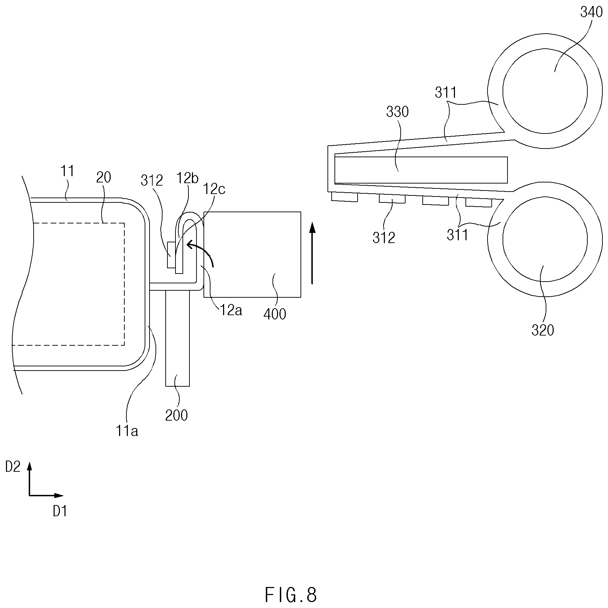

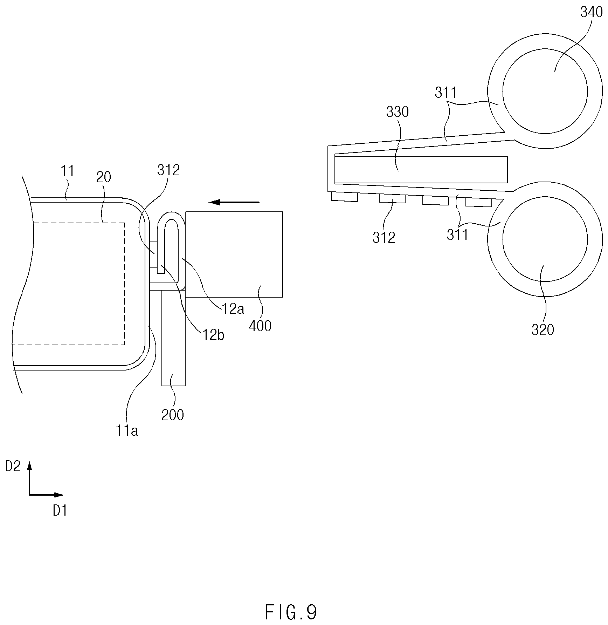

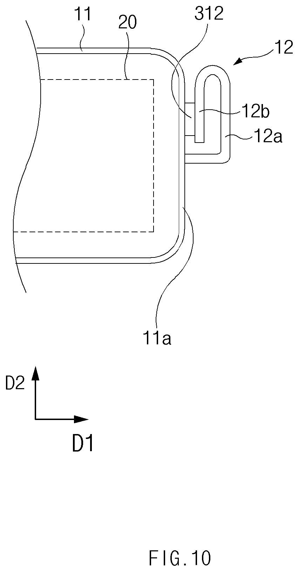

FIG. 4 is a diagram illustrating that the tape supply unit moves toward the sealing portion in the initial placement of the apparatus for manufacturing the pouch for the secondary battery according to the first embodiment of the present disclosure, FIG. 5 is a diagram illustrating the process for attaching the adhesive tape to the sealing portion in the apparatus for manufacturing the pouch for the secondary battery according to the first embodiment of the present disclosure, FIG. 6 is a diagram illustrating that the tape supply unit according to the first embodiment of the present disclosure moves away from the sealing portion after attaching the adhesive tape to the sealing portion, FIG. 7 is a diagram illustrating that the supply roll supplies the tape feed and the collection roll collects the release sheet after the tape supply unit according to the first embodiment of the present disclosure moves away from the sealing portion, FIG. 8 is a diagram illustrating the process for folding the sealing portion in the apparatus for manufacturing the pouch for the secondary battery according to the first embodiment of the present disclosure, FIG. 9 is a diagram illustrating the process for attaching the adhesive tape to the pouch body in the apparatus for manufacturing the pouch for the secondary battery according to the first embodiment of the present disclosure, and FIG. 10 is a diagram illustrating the pouch for the secondary battery manufactured by the apparatus for manufacturing the pouch for the secondary battery according to the first embodiment of the present disclosure.

Hereinafter, the processes for folding and bonding the sealing portion 12 using the apparatus 100 for manufacturing the pouch for the secondary battery according to the first embodiment of the present disclosure will be described with reference to FIGS. 4 to 10.

Referring to FIG. 4, in a state that the sealing portion 12 is supported by the support unit 200, the tape supply unit 300 may move to the left in the first direction D1 and then down in the second direction D2 to approach the sealing portion 12. In this instance, when the mover 330 moves while in a state of applying pressure to the release sheet 311, the other components of the tape supply unit 300 such as the supply roll 320 and the collection roll 340 may move together.

Referring to FIG. 5, the tape supply unit 300 may keep moving down in the second direction D2 to attach the adhesive tape 312 to the target adhesive surface 12c. In this instance, the tape supply unit 300 may press the target adhesive surface 12c of the sealing portion 12 to attach the first adhesive surface 312a of the adhesive tape 312 to the target adhesive surface 12c.

Referring to FIG. 6, when the tape supply unit 300 moves up in the second direction D2 and then to the right in the first direction D1, the tape supply unit 300 may be away from the sealing portion 12. In this instance, the adhesive tape 312 may stay attached to the sealing portion 12.

That is, because the first adhesive surface 312a of the adhesive tape 312 has stronger adhesive strength than the second adhesive surface 312b, when the tape supply unit 300 moves in the direction away from the sealing portion 12 in a state that the first adhesive surface 312a of the adhesive tape 312 is attached to the target adhesive surface 12c, the adhesive tape 312 may be separated from the release sheet 311 and transferred onto the target adhesive surface 12c.

Referring to FIG. 7, the collection roll 340 may collect the release sheet 311 from which the adhesive tape 312 has been separated. That is, the collection roll 340 may collect the release sheet 311 from which the adhesive tape 312 has been separated while rotating clockwise or counterclockwise, and the supply roll 320 may supply the tape feed 310 including the release sheet 311 with the adhesive tape 312 attached thereto while rotating in the same direction as the collection roll 340. While the collection roll 340 and the supply roll 320 rotate, the mover 330 may maintain the tension of the release sheet 311 by applying pressure to the second surface of the release sheet 311.

Referring to FIG. 8, the pressing unit 400 may move up in the second direction D2 to fold the sealing portion 12. Specifically, the pressing unit 400 may fold the first sealing portion 12a that protrudes in a straight line direction.

Referring to FIG. 9, the pressing unit 400 may move to the left in the first direction D1 to press the sealing portion 12. Accordingly, the target adhesive surface 12c moves in the direction that gets closer to the pouch body 11, and the second adhesive surface 312b of the adhesive tape 312 attached to the target adhesive surface 12c may be attached to the side 11a of the pouch body.

Referring to FIG. 10, the sealing portion 12 in the folded and pressed state may be secured to the pouch body 11 by the adhesive tape 312. Specifically, the first adhesive surface 312a of the adhesive tape 312 may be attached to the target adhesive surface 12c, and the second adhesive surface 312b may be attached to the side 11a of the pouch body.

The apparatus 100 for manufacturing the pouch for the secondary battery according to the first embodiment of the present disclosure has an effect of simplifying the structure of the manufacturing apparatus for performing the processes for folding and bonding the sealing portion 12 of the pouch 10, and minimizing the space occupied by the sealing portion 12, thereby improving space utilization and the degree of freedom in design.

### (Second embodiment)

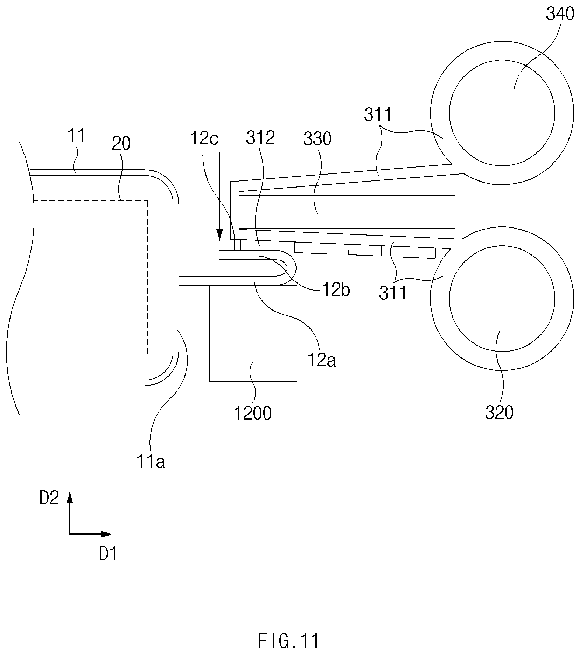

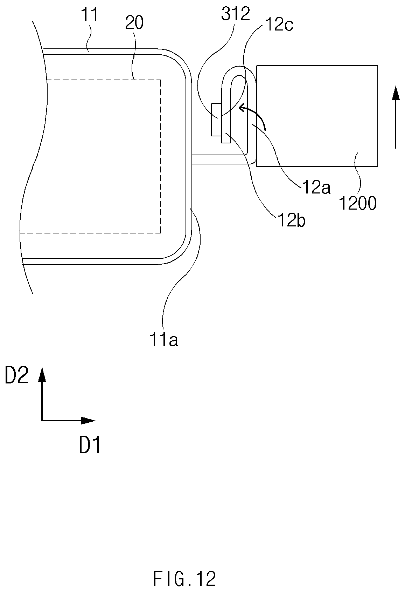

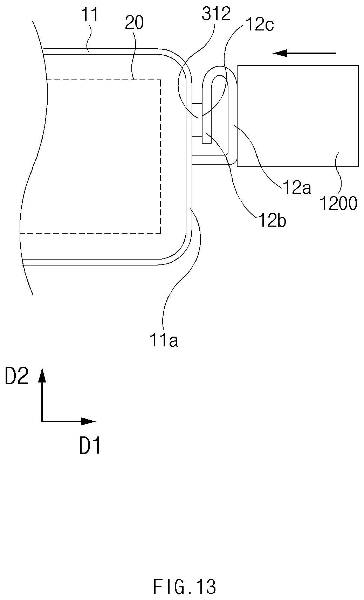

FIG. 11 is a diagram illustrating the process for attaching the adhesive tape to the sealing portion in the apparatus for manufacturing the pouch for the secondary battery according to a second embodiment of the present disclosure, FIG. 12 is a diagram illustrating the process for folding the sealing portion in the apparatus for manufacturing the pouch for the secondary battery according to the second embodiment of the present disclosure, and FIG. 13 is a diagram illustrating the process for attaching the adhesive tape to the pouch body in the apparatus for manufacturing the pouch for the secondary battery according to the second embodiment of the present disclosure.

The apparatus for manufacturing the pouch for the secondary battery according to the second embodiment of the present disclosure will be described with reference to FIGS. 11 to 13, and for details of each component of the apparatus for manufacturing the pouch for the secondary battery according to the second embodiment of the present disclosure, reference may be made to the above description of each component of the apparatus 100 for manufacturing the pouch for the secondary battery according to the first embodiment of the present disclosure. Accordingly, a detailed description of the components of the apparatus for manufacturing the pouch for the secondary battery according to the second embodiment that share with the apparatus 100 for manufacturing the pouch for the secondary battery according to the first embodiment and the components having the same reference numerals is omitted, and the following description will be provided based on differences.

When comparing the apparatus for manufacturing the pouch for the secondary battery according to the second embodiment of the present disclosure with the apparatus 100 for manufacturing the pouch for the secondary battery according to the first embodiment of the present disclosure, there is a difference in that the support unit 1200 according to the second embodiment performs all the functions of the support unit 200 and the pressing unit 400 according to the first embodiment.

In a state that the adhesive tape 312 is supplied (attached) to the target adhesive surface 12c, the support unit 1200 may press the sealing portion 12 to attach the adhesive tape 312 to the pouch body 11. That is, the support unit 1200 may support the sealing portion 12 under the sealing portion 12, and fold and press the sealing portion 12 to attach the adhesive tape 312 transferred onto the target adhesive surface 12c to the side 11a of the pouch body. In this instance, for the description of the support unit 1200, reference is made to the description of the pressing unit 400 of the apparatus 100 for manufacturing the pouch for the secondary battery according to the first embodiment of the present disclosure.

In addition, for the description of the support unit 1200 of the apparatus for manufacturing the pouch for the secondary battery according to the second embodiment of the present disclosure, reference may be made to the description of the support unit 200 of the apparatus 100 for manufacturing the pouch for the secondary battery according to the first embodiment of the present disclosure.

Accordingly, the apparatus for manufacturing the pouch for the secondary battery according to the second embodiment of the present disclosure has the effect of supporting and pressing the sealing portion 12 using the support unit 1200 without needing to have the components for supporting and pressing the sealing portion 12.

### (Third embodiment)

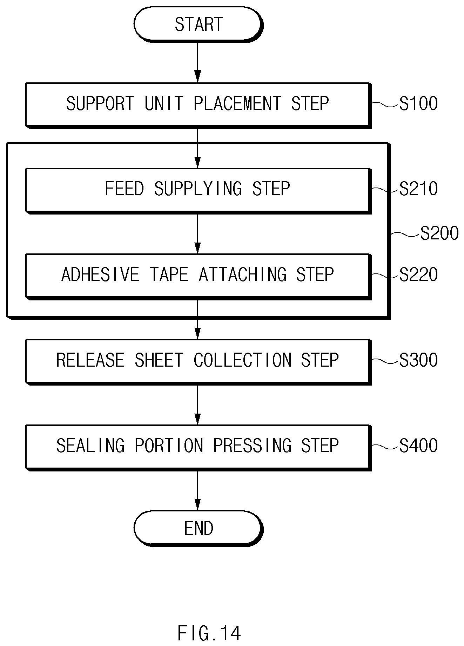

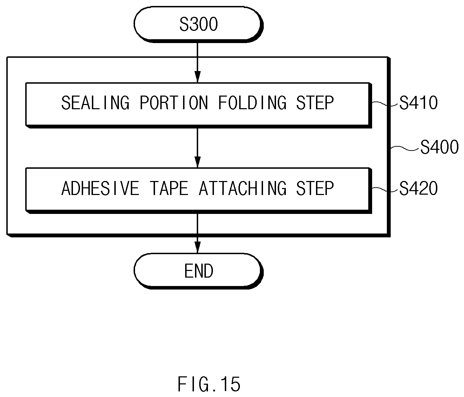

FIG. 14 is a flowchart of a method for manufacturing a pouch for a secondary battery according to a third embodiment of the present disclosure, and FIG. 15 is a flowchart of a sealing portion pressing step in the method for manufacturing the pouch for the secondary battery according to the third embodiment of the present disclosure.

Referring to FIGS. 14 and 15, the method for manufacturing the pouch for the secondary battery according to the third embodiment of the present disclosure may be used to manufacture the pouch 10 for the secondary battery according to the first embodiment of the present disclosure, and include a support unit placement step (S100) of placing the support unit 200 at one side of the sealing portion 12, and an adhesive tape supplying step (S200) of supplying the adhesive tape 312 to the target adhesive surface 12c of the sealing portion 12.

In this instance, for details of each component mentioned in the method for manufacturing the pouch for the secondary battery according to the third embodiment of the present disclosure, reference may be made to the above description of each component of the apparatus 100 for manufacturing the pouch for the secondary battery according to the first embodiment of the present disclosure.

The adhesive tape supplying step (S200) may include a feed supplying step (S210) of supplying the tape feed 310 including the adhesive tape 312 and the release sheet 311 to which the adhesive tape 312 is attached, and an adhesive tape attaching step (S220) of moving the mover 330 toward the support unit 200 to attach the adhesive tape 312 to the target adhesive surface 12c, wherein the mover 330 applies pressure to the release sheet 311 to maintain the tension of the tape feed 310.

Furthermore, the method for manufacturing the pouch for the secondary battery according to the third embodiment of the present disclosure may further include, after the adhesive tape attaching step (S220), a release sheet collection step (S300) of collecting the release sheet 311 from which the adhesive tape 312 has been separated from the tape feed 310.

Additionally, the method for manufacturing the pouch for the secondary battery according to the third embodiment of the present disclosure may further include, after the adhesive tape attaching step (S220), a sealing portion pressing step (S400) of pressing the sealing portion 12 to attach the other surface of the adhesive tape 312 to the pouch body 11 in a state that one surface of the adhesive tape 312 is attached to the target adhesive surface 12c.

In this instance, the sealing portion pressing step (S400) may be performed independently of the release sheet collection step (S300). Accordingly, the sealing portion pressing step (S400) may be performed before, after or simultaneously with the release sheet collection step (S300).

The sealing portion pressing step (S400) may include a sealing portion folding step (S410) of folding the sealing portion 12, and an adhesive tape attaching step (S420) of pressing the sealing portion 12 in the direction that gets closer to the pouch body 11 to attach the other surface of the adhesive tape 312 to the pouch body 11.

The method for manufacturing the pouch for the secondary battery according to the third embodiment of the present disclosure has an effect of simplifying the structure of the manufacturing apparatus for performing the processes for folding and bonding the sealing portion 12 of the pouch 10, and minimizing the space occupied by the sealing portion 12, thereby improving space utilization and the degree of freedom in design.

Although the present disclosure has been hereinabove described with regard to a certain number of embodiments and drawings, the present disclosure is not limited thereto, and the present disclosure may be embodied in different forms by persons having ordinary skill in the technical field pertaining to the present disclosure within the technical scope of the present disclosure and the appended claims and their equivalents.

**[List of Reference Numerals]**

| | | | |
|---|---|---|---|
| 100: | Apparatus for manufacturing pouch for secondary battery | 200: | Support unit |
| 300: | Tape supply unit | 310: | Tape feed |
| 311: | Release sheet | 312: | Adhesive tape |
| 312a: | First adhesive surface | 312b: | Second adhesive surface |
| 320: | Supply roll | 330: | Mover |
| 340: | Collection roll | 400: | Pressing unit |

## Claims

1. An apparatus for manufacturing a pouch for a secondary battery including a pouch body accommodating an electrode assembly and a sealing portion disposed at the pouch body, the apparatus comprising:
a support unit configured to support the sealing portion at a side; and
a tape supply unit configured to supply an adhesive tape to a target adhesive surface of the sealing portion,
wherein the tape supply unit includes:
a supply roll configured to supply a tape feed including the adhesive tape and a release sheet to which the adhesive tape is attached; and
a mover configured to apply pressure to the release sheet to maintain tension of the tape feed, and move toward the support unit to attach the adhesive tape to the target adhesive surface.

2. The apparatus for manufacturing the pouch for the secondary battery according to claim 1,
wherein the tape supply unit further includes:
a collection roll configured to collect the release sheet from which the adhesive tape has been separated from the tape feed.

3. The apparatus for manufacturing the pouch for the secondary battery according to claim 1, further comprising:
a pressing unit configured to press the sealing portion in a state that the adhesive tape is attached to the target adhesive surface to attach the adhesive tape to the pouch body.

4. The apparatus for manufacturing the pouch for the secondary battery according to claim 3,
wherein a first adhesive surface which is a surface of the adhesive tape is attached to the target adhesive surface, and
wherein a second adhesive surface which is an opposite surface of the adhesive tape is attached to the pouch body.

5. The apparatus for manufacturing the pouch for the secondary battery according to claim 4,
wherein the pressing unit is configured to:
in a state that the first adhesive surface is attached to the target adhesive surface,
bend the sealing portion so that the second adhesive surface faces the pouch body, and bring the sealing portion into close contact with the pouch body to attach the second adhesive surface to the pouch body.

6. The apparatus for manufacturing the pouch for the secondary battery according to claim 4,
wherein when the first adhesive surface is attached to the target adhesive surface,
the mover moves in a direction away from the support unit, and
the adhesive tape is separated from the release sheet and attached to the target adhesive surface.

7. The apparatus for manufacturing the pouch for the secondary battery according to claim 3,
wherein the sealing portion includes:
a first sealing portion protruding from the pouch body; and
a second sealing portion folded from the first sealing portion, the target adhesive surface being present on the second sealing portion, and
wherein when the pressing unit folds the first sealing portion, the target adhesive surface is disposed facing the pouch body.

8. The apparatus for manufacturing the pouch for the secondary battery according to claim 7,
wherein the pressing unit is configured to:
press the first sealing portion in a direction that gets closer to the pouch body in the folded state of the first sealing portion.

9. The apparatus for manufacturing the pouch for the secondary battery according to claim 1,
wherein the adhesive tape is attached to a first surface of the release sheet, and
wherein the mover contacts a second surface of the release sheet opposite the first surface.

10. The apparatus for manufacturing the pouch for the secondary battery according to claim 1,
wherein the support unit is configured to:
press the sealing portion to attach the adhesive tape to the pouch body in a state that the adhesive tape is supplied to the target adhesive surface.

11. A tape supply unit for supplying an adhesive tape for attaching a sealing portion to a pouch body, the tape supply unit comprising:
a supply roll configured to supply a tape feed including the adhesive tape and a release sheet to which the adhesive tape is attached; and
a mover configured to apply pressure to the release sheet to maintain tension of the tape feed, and move toward a support unit to attach the adhesive tape to the sealing portion.

12. The tape supply unit according to claim 11, further comprising:
a collection roll configured to collect the release sheet from which the adhesive tape has been separated from the tape feed.

13. A method for manufacturing a pouch for a secondary battery including a pouch body accommodating an electrode assembly and a sealing portion disposed at the pouch body, the method comprising:
a support unit placement step of placing a support unit at a side of the sealing portion; and
an adhesive tape supplying step of supplying an adhesive tape to a target adhesive surface of the sealing portion;
wherein the adhesive tape supplying step comprises:
a feed supplying step of supplying a tape feed including the adhesive tape and a release sheet to which the adhesive tape is attached; and
an adhesive tape attaching step of attaching the adhesive tape to the target adhesive surface by movement of a mover toward the support unit, the mover applying pressure to the release sheet to maintain tension of the tape feed.

14. The method for manufacturing the pouch for the secondary battery according to claim 13, after the adhesive tape attaching step, further comprising:
a release sheet collection step of collecting the release sheet from which the adhesive tape has been separated from the tape feed.

15. The method for manufacturing the pouch for the secondary battery according to claim 13, after the adhesive tape attaching step, further comprising:
a sealing portion pressing step of pressing the sealing portion to attach an opposite surface of the adhesive tape to the pouch body in a state that a surface of the adhesive tape is attached to the target adhesive surface.

16. The method for manufacturing the pouch for the secondary battery according to claim 15,
wherein the sealing portion pressing step comprises:
a sealing portion folding step of folding the sealing portion; and
an adhesive tape attaching step of pressing the sealing portion in a direction that gets closer to the pouch body to attach the opposite surface of the adhesive tape to the pouch body.
